# EUROPEAN PATENT APPLICATION

(11) **EP 4 195 329 A1**
(43) Date of publication of application: **14.06.2023**
(21) Application number: 22811517.6
(22) Date of filing: 06.05.2022
(51) Int. Cl.: H01M 4/62, H01M 4/131, H01M 10/052, H01M 4/525, H01M 4/505

(54) **POSITIVE ELECTRODE ADDITIVE AND POSITIVE ELECTRODE FOR LITHIUM SECONDARY BATTERY CONTAINING SAME**

(30) Priority: 25.05.2021 KR 20210066767
(71) Applicant: LG Energy Solution, Ltd., Seoul 07335 (KR)
(72) Inventor: KIM, Ji Hye, Daejeon 34122 (KR); OH, Sang Seung, Daejeon 34122 (KR); KIM, Hye Hyeon, Daejeon 34122 (KR); JO, Chi Ho, Daejeon 34122 (KR); YOO, Tae Gu, Daejeon 34122 (KR)
(74) Representative: Hoffmann Eitle
(86) International application number: PCT/KR2022/006455
(87) International publication number: WO 2022/250324

(57) **Abstract**

The present technology relates to a positive electrode additive for a lithium secondary battery and a positive electrode for a lithium secondary battery including the same, wherein the positive electrode additive contains a carbon material on a surface of a lithium cobalt oxide represented by Chemical Formula 1 to improve the low electrical conductivity of the positive electrode additive, and an effect of improving the problem caused by the amount of gases generated during initial charging and discharging (i.e., "activation") is excellent, and thus a positive electrode and lithium secondary battery including the positive electrode additive have excellent electrical performance.

## Description

### [Technical Field]

The present disclosure relates to a positive electrode additive for a lithium secondary battery and a positive electrode for a lithium secondary battery containing the same.

This application claims the benefit of priority based on Korean Patent Application No. 10-2021-0066767, filed on May 25, 2021, and the entire contents of the Korean patent application are incorporated herein by reference.

### [Background Art]

As development and demand for technology for mobile devices increase, the demand for secondary batteries serving as energy sources is rapidly increasing. Among these secondary batteries, lithium secondary batteries having a high energy density and operating potential, a long cycle life, and a low self-discharge rate have been commercialized and widely used.

Recently, as lithium secondary batteries are used as power sources for medium and large-sized devices such as electric vehicles, the lithium secondary batteries are further required to have a high capacity, a high energy density, and a low cost, and irreversible additives used in electrodes are also required to have a higher irreversible capacity. However, it is true that there was a limit in developing positive electrode additives having a high irreversible capacity.

Meanwhile, conventional irreversible additives such as Li₆CoO₄ and the like are generally prepared by reacting cobalt oxide or the like with an excess of lithium oxide. The irreversible additives prepared in this way are structurally unstable so that a large amount of gases such as oxygen (O₂) gas, carbon dioxide (CO₂), and the like may be generated as charging proceeds. The gas generated in this way may cause volume expansion of an electrode assembly to lower the stability of a battery, and a carbon oxide such as carbon dioxide (CO₂) may induce a side reaction that decomposes an electrolyte to act as a major factor causing the deterioration of battery performance.

Further, conventionally used irreversible additives exhibit a very low powder electrical conductivity of 10⁻¹¹ S/cm or less, which is close to that of an insulator, due to a two-dimensional (2D) percolating network. The low powder electrical conductivity increases the electrical resistance of a positive electrode, and in this case, a large capacity of 200 mAh/g or more is exhibited at a low C-rate, whereas, when the C-rate increases, since the performance is rapidly reduced due to the large resistance as charging and discharging proceed, there is a limitation in that the charge/discharge capacity of the battery is reduced and fast charging/discharging is difficult.

Therefore, the development of a lithium secondary battery in which a charge/discharge capacity is high, amounts of gases generated during charging and discharging are reduced so that safety of the battery is excellent, and a side reaction with an electrolyte due to the generated gases is reduced and electrical conductivity of a positive electrode is improved so that electrical performance is excellent is required.

### [Document of Related Art]

### [Patent Document]

Korean Laid-open Patent Publication No. 10-2019-0078392

### [Disclosure]

### [Technical Problem]

An object of the present technology is to provide a positive electrode for a lithium secondary battery, in which a charge/discharge capacity is high by using an irreversible additive in a positive electrode and gas generation is reduced so that safety of the battery is excellent, and a side reaction with an electrolyte due to the generated gas is reduced and the electrical conductivity of a positive electrode is improved so that electrical performance is excellent, and a lithium secondary battery including the same.

### [Technical Solution]

The present technology is directed to solving the above-described problem and provides a positive electrode additive containing a lithium cobalt oxide represented by Chemical Formula 1 below, and a carbon material adsorbed on a surface of the lithium cobalt oxide:

[Chemical Formula 1] LiₚCo_{(1-q)}M¹_{q}O₄

in Chemical Formula 1 above, M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

Here, the carbon material may include one or more materials selected from the group consisting of carbon nanotubes, carbon nanofibers, graphite, graphene, carbon black, Ketjen black, and acetylene black.

The carbon material may have a surface that is modified with one or more functional groups selected from the group consisting of a hydroxyl group, a carboxyl group, an amino group, an amide group, a sulfone group, and a sulfide group and/or contains one or more compounds selected from the group consisting of monoethanolamine, diethanolamine, triethanolamine, diethylenetriamine, triethylenetetraamine, trisaminoC1-3alkylamine, polyC1-3alkyleneamine, and polyC1-3alkyleneimine.

The carbon material may be adsorbed onto 70% or more of an entire surface of the lithium cobalt oxide.

The content of the carbon material may range from 0.1 to 20 parts by weight with respect to 100 parts by weight of the lithium cobalt oxide.

An average thickness of the adsorbed carbon material may range from 10 nm to 200 nm.

An average particle size of the lithium cobalt oxide may range from 0.1 to 10 µm.

The lithium cobalt oxide may have a tetragonal structure with a space group of P4₂/nmc.

The present technology is directed to solving the above-described problem and provides a positive electrode for a lithium secondary battery, including a positive electrode current collector, and a positive electrode mixture layer positioned on the positive electrode current collector and containing a positive electrode active material, the positive electrode additive according to the present technology described above, and a binder.

The positive electrode active material may be a lithium metal composite oxide represented by Chemical Formula 2 below:

[Chemical Formula 2] Liₓ[Ni_{y}Co_{z}Mn_{w}M²ᵥ]Oᵤ

in Chemical Formula 2 above, M² denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0≤y<0.95, 0<z≤0.5, 0<w≤0.5, 0≤v≤0.2, and 1.5≤u≤4.5, respectively.

The positive electrode active material may be included in an amount of 80 to 99.5 parts by weight with respect to 100 parts by weight of the positive electrode mixture layer.

The positive electrode additive may be included in an amount of 0.1 to 5 parts by weight with respect to 100 parts by weight of the positive electrode mixture layer.

The positive electrode may further include a conductive material, and in this case, the conductive material may be included in an amount of 2 parts by weight or less with respect to 100 parts by weight of the positive electrode mixture layer.

### [Advantageous Effects]

In the positive electrode additive for a lithium secondary battery according to the present technology, a carbon material is contained on a surface of a lithium cobalt oxide represented by Chemical Formula 1 and thus the low electrical conductivity of a positive electrode additive can be improved, and an effect of reducing a problem caused by amounts of gases generated during initial charging and discharging (i.e., "activation") is excellent, and thus a positive electrode and lithium secondary battery including the positive electrode additive can have excellent electrical performance.

### [Detailed Description of the Preferred Embodiments]

### [Best Mode for Implementation of the Invention]

While the present invention may have various modifications and alternative forms, specific embodiments thereof will be described in detail.

However, it should be understood that there is no intent to limit the present invention to the particular forms disclosed, and on the contrary, the present invention is to cover all modifications, equivalents, and alternatives falling within the spirit and scope of the present invention.

It should be further understood that the terms "comprise," "comprising," "include," and/or "including," when used herein, specify the presence of stated features, integers, steps, operations, components, parts, or combinations thereof, but do not preclude the presence or addition of one or more other features, integers, steps, operations, components, parts, or combinations thereof.

In addition, when a layer, film, region, or plate is referred to as being "formed on" another layer, film, region, or plate, it includes a case in which the layer, film, region, or plate is formed directly on another layer, film, region, or plate and a case in which still another layer, film, region, or plate is interposed between the layer, film, region, or plate and another layer, film, region, or plate. In contrast, when a layer, film, region, or plate is referred to as being "formed below" another layer, film, region, or plate, it includes a case in which the layer, film, region, or plate is formed directly below another layer, film, region, or plate and a case in which still another layer, film, region, or plate is interposed between the layer, film, region, or plate and another layer, film, region, or plate. Further, in this specification, when a component is referred to as being disposed "on" another component, it includes a case in which a component is disposed above another component and a case in which a component is disposed below another component.

In addition, in the present invention, the term "main component" may refer to a component in an amount of 50 wt% or more, 60 wt% or more, 70 wt% or more, 80 wt% or more, 90 wt% or more, 95 wt% or more, or 97.5 wt% or more with respect to a total weight of a composition or a specific component, and in some cases, may refer to a component constituting the total amount of the composition or specific component, that is, a component in an amount of 100 wt%.

Further, in the present invention, "Ah" is a unit of capacity of a lithium secondary battery, is referred to as "ampere-hour," and is an amount of current per hour. For example, when a capacity of a battery is "3000 mAh," it means that the battery can be discharged for one hour with a current of 3000 mA.

Hereinafter, the present invention will be described in more detail.

### Positive electrode additive for lithium secondary battery

In an embodiment, the present disclosure provides a positive electrode additive containing a lithium cobalt oxide represented by Chemical Formula 1 below, and a carbon material adsorbed on a surface of the lithium cobalt oxide.

[Chemical Formula 1] LiₚCo_{(1-q)}M¹_{q}O₄

In Chemical Formula 1 above, M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The positive electrode additive according to the present technology includes a lithium cobalt oxide as a main component, and has a structure in which the carbon material is adsorbed onto the surface of the lithium cobalt oxide.

Here, the lithium cobalt oxide may be one or more compounds represented by Chemical Formula 1 below.

[Chemical Formula 1] LiₚCo_{(1-q)}M¹_{q}O₄

In Chemical Formula 1 above, M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The lithium cobalt oxide may contain lithium in excess to provide lithium for lithium consumption caused by an irreversible chemical and physical reaction at a negative electrode during initial charging, and accordingly, the charging capacity of the battery may be increased and the irreversible capacity of the battery may be reduced, resulting in an improvement in lifetime characteristics of the battery.

Among positive electrode additives, the positive electrode additive represented by Chemical Formula 1 above has a higher amount of lithium ions than that of nickel-containing oxide commonly used in the art, and thus the lithium ions lost due to an irreversible reaction during initial activation of the battery may be replenishment, thereby significantly improving the charge/discharge capacity of the battery. Further, in comparison to iron and/or manganese-containing oxides commonly used in the art, there is no side reaction that occurs due to the elution of transition metals during charging and discharging of the battery, and thus the battery has excellent stability. The lithium cobalt oxide represented by Chemical Formula 1 may include Li₆CoO₄, Li₆Co_{0.5}Zn_{0.5}O₄, Li₆Co_{0.7}Zn_{0.3}O₄, or the like.

In addition, an average particle size of the lithium cobalt oxide represented by Chemical Formula 1 may range from 0.1 to 10 µm, and specifically, may range from 0.1 to 8 µm, 0.1 to 5 µm, 0.1 to 3 µm, 0.5 to 2µm, 0.1 to 0.9 µm, 0.1 to 0.5 µm, 0.6 to 0.9 µm, 1 to 4 µm, 4 to 6 µm, or 6 to 9 µm. In the present technology, by controlling the average particle size of the lithium cobalt oxide within the above range, the irreversible activity of lithium cobalt oxide may be increased, and the powder electrical conductivity of the lithium cobalt oxide may be prevented from being reduced.

Further, the lithium cobalt oxide represented by Chemical Formula 1 may have a tetragonal crystal structure, and may be included in a space group of P4₂/nmc having a twisted tetrahedral structure formed by a cobalt element and an oxygen element among the tetragonal crystal structures. Since the positive electrode additive having the twisted tetrahedral structure has a twisted tetrahedral structure formed by the cobalt element and the oxygen element, the positive electrode additive may be structurally unstable so that a large amount of gas may be generated during initial charging and discharging (i.e., "activation") and/or subsequent charging and discharging, and accordingly, volume expansion of the electrode assembly may be caused, thereby reducing the performance of the battery and lowering safety. However, the positive electrode additive according to the present technology may have a configuration containing the carbon material on the surface of the lithium cobalt oxide represented by Chemical Formula 1, and thus the above problems can be improved.

Specifically, the positive electrode additive according to the present technology may have a structure in which the carbon material is physically and/or chemically adsorbed onto the surface of the lithium cobalt oxide represented by Chemical Formula 1. Here, the "physical adsorption" may mean that elements such as lithium (Li), cobalt (Co), oxygen (O), and the like exposed on the surface of the lithium cobalt oxide and functional groups and/or compounds present on the surface of the carbon material are bound to each other by interacting with each other through a weak intermolecular force such as van der Waals. Further, the "chemical adsorption" may mean that elements such as lithium (Li), cobalt (Co), oxygen (O) and the like exposed on the surface of the lithium cobalt oxide and the functional groups thereof and/or compounds present on the surface of the carbon material are bound to each other through a chemical bond such as a hydrogen bond or the like.

Further, the carbon material may include one or more materials selected from the group consisting of carbon nanotubes, carbon nanofibers, graphite, graphene, carbon black, Ketjen black, and acetylene black.

In addition, the carbon material may be a material whose surface is modified with a functional group capable of hydrogen bonding or contains a compound containing an amino group.

Specifically, the surface of the carbon material may be modified with one or more functional groups selected from the group consisting of a hydroxyl group, a carboxyl group, an amino group, an amide group, a sulfone group, and a sulfide group. Such a modification may be performed in a manner conventionally applied in the art. For example, the carbon material may be a material subjected to heat treatment under an oxygen gas condition, or, in some cases, heat treatment or hydrothermal treatment is performed after uniformly mixing/coating with a compound/polymer having the above functional group, so that the compound/polymer is thermally decomposed to introduce functional groups thereof onto the surface of the material.

Further, the carbon material may be a material whose surface contains one or more compounds selected from the group consisting of monoethanolamine, diethanolamine, triethanolamine, diethylenetriamine, triethylenetetraamine, trisaminoC1-3alkylamine, polyC1-3alkyleneamine, and polyC1-3alkyleneimine, and in this case, the carbon material may be prepared by being uniformly mixed with the compound and then dried in a vacuum oven at 50 to 100 °C for 10 to 100 hours.

As described above, since the present technology has a structure in which the carbon material whose surface is modified with a functional group such as a hydroxyl group, a carboxyl group, an amino group, or the like or contains a compound such as polyalkyleneamine or the like is adsorbed onto the surface of the lithium cobalt oxide, and thus a conductive network or a conductive path may be formed on the surface of the lithium cobalt oxide having low powder electrical conductivity, and thus high conductivity may be imparted. In particular, when a compound such as polyalkyleneamine or the like is contained on the surface of the carbon material, carbon oxides such as carbon monoxide (CO), carbon dioxide (CO₂), and the like formed by electrolyte decomposition during charging and discharging of the lithium secondary battery may be adsorbed onto the surface of the carbon material, and thus the carbon oxides may react with lithium hydroxide (LiOH) or the like to generate HF or LiF, thereby promoting gas generation due to the generated HF or LiF and preventing the activity of a positive electrode active material contained in the positive electrode from deteriorating.

Further, the carbon material may be adsorbed onto 70% or more of an entire surface of the lithium cobalt oxide represented by Chemical Formula 1. Specifically, the carbon material may be adsorbed onto 75% or more; 80% or more, 85% or more, 90% or more, 95% or more, 70% to 95%, 75% to 95%, 80% to 95%, or 80% to 90% of the entire surface of the lithium cobalt oxide, and in some cases, may be adsorbed onto the entire surface of the lithium cobalt oxide and completely coated to have the form of a carbon layer.

In addition, the content of the carbon material may range from 0.1 to 20 parts by weight with respect to 100 parts by weight of the lithium cobalt oxide. Specifically, the content of the carbon material may range from 0.1 to 15 parts by weight, 0.1 to 10 parts by weight, 0.1 to 5 parts by weight, 0.1 to 3 parts by weight, 1 to 4 parts by weight, 5 to 10 parts by weight, 6 to 9 parts by weight, 5 to 15 parts by weight, 11 to 19 parts by weight, 16 to 20 parts by weight, or 8 to 14 parts by weight with respect to 100 parts by weight of the lithium cobalt oxide.

Furthermore, an average thickness of the carbon material adsorbed onto the surface of the lithium cobalt oxide may range from 10 nm to 200 nm, and specifically, may range from 10 nm to 150 nm, 10 nm to 100 nm, 10 nm to 90 nm, 10 nm to 70 nm, 20 nm to 60 nm, 50 nm to 150 nm, 50 nm to 90 nm, 90 nm to 120 nm, 130 nm to 190 nm, or 160 nm to 190 nm.

In the present technology, by controlling a surface area ratio, a content, and/or an average thickness of the carbon material adsorbed onto the surface of the lithium cobalt oxide within the above ranges, and thus a conductive path may be sufficiently formed on the surface of the lithium cobalt oxide, it is possible to effectively improve the electrical conductivity of the positive electrode additive with a smaller amount of carbon material than a composite or the like in which lithium cobalt oxide and a carbon material are uniformly mixed, and it is possible to reduce the amount of the conductive material or the like used to improve the electrical conductivity of the positive electrode additive. At the same time, it is possible to suppress a side reaction of the lithium cobalt oxide during charging by increasing the structural stability of the lithium cobalt oxide represented by Chemical Formula 1.

Meanwhile, the positive electrode additive may be prepared by applying any method capable of adsorbing and/or coating a carbon material on a surface of lithium cobalt oxide without particular limitation.

As an example, the lithium cobalt oxide represented by Chemical Formula 1 and the carbon material may be prepared by being input into a reactor such as a homo mixer or the like together with a polymer having a hydroxyl group, a carboxyl group, an amino group, an amide group, a sulfone group, and/or a sulfide group and performing mixing, and then thermally decomposition at 500 to 800 °C. In this case, the polymer may be thermally decomposed by heat treatment and the functional group contained in the polymer may be positioned between the carbon material and the lithium cobalt oxide, and thus the carbon material may be adsorbed onto the lithium cobalt oxide.

As another example, the lithium cobalt oxide represented by Chemical Formula 1 and the carbon material may be prepared by dispersing the carbon material in a dispersion medium, adding the lithium cobalt oxide thereto, and then performing ultrasonic irradiation, and in this case, the ultrasonic irradiation may be performed under a condition of a frequency of 30 kHz to 60 kHz while maintaining a temperature of 20 °C to 35 °C.

In the case of a method of preparing the lithium cobalt oxide by performing heat treatment on a mixture of precursor materials that are used in the preparation of the lithium cobalt oxide represented by Chemical Formula 1 and carbon material precursors, the carbon material may be present on a surface of the prepared lithium cobalt oxide as well as inside the lithium cobalt oxide. However, as compared to the above method, the methods according to the present technology may not only secure the structural stability of the lithium cobalt oxide, but also realize high irreversible activity of the lithium cobalt oxide and effectively improve the electrical conductivity of the positive electrode additive with a small amount of carbon material.

### Positive electrode for lithium secondary battery

Further, in an embodiment, the present disclosure provides a positive electrode for a lithium secondary battery, which includes a positive electrode current collector and a positive electrode mixture layer positioned on the positive electrode current collector and containing a positive electrode active material, the positive electrode additive of the present technology described above, and a binder, wherein the positive electrode additive contains the lithium cobalt oxide represented by Chemical Formula 1 below, and a carbon material adsorbed onto a surface of the lithium cobalt oxide.

[Chemical Formula 1] LiₚCo_{(1-q)}M¹_{q}O₄

In Chemical Formula 1 above, M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The positive electrode for a lithium secondary battery according to the present technology has a structure in which the positive electrode mixture layer is formed on the positive electrode current collector, wherein the positive electrode mixture layer has a configuration including a positive electrode active material, the positive electrode additive of the present technology described above, a conductive material, and a binder.

In this case, the positive electrode active material may be a lithium composite transition metal oxide containing two or more elements selected from the group consisting of nickel (Ni), cobalt (Co), manganese (Mn), aluminum (Al), zinc (Zn), titanium (Ti), magnesium (Mg), chromium (Cr), and zirconium (Zr). For example, the positive electrode active material may be a lithium nickel metal oxide represented by Chemical Formula 2 below, which is capable of reversible intercalation and deintercalation.

[Chemical Formula 2] Liₓ[Ni_{y}Co_{z}Mn_{w}M²ᵥ]Oᵤ

In Chemical Formula 2 above, M² denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0≤y<0.95, 0<z≤0.5, 0<w≤0.5, 0≤v≤0.2, and 1.5≤u≤4.5, respectively.

The lithium nickel composite oxide represented by Chemical Formula 2 is a composite metal oxide containing lithium, nickel, cobalt, and manganese, and in some cases, may have a form in which another transition metal M² is doped. For example, the positive electrode active material may include one or more compounds selected from the group consisting of LiNi_{1/3}Co_{1/3}Mn_{1/3}O₂, LiNi_{0.6}Co_{0.2}Mn_{0.2}O₂, LiNi_{0.8}Co_{0.1}Mn_{0.1}O₂, LiNi_{0.9}Co_{0.05}Mn_{0.05}O₂, LiNi_{0.8}Co_{0.1}Mn_{0.05}Al_{0.05}O₂ and LiNi_{0.7}Co_{0.1}Mn_{0.1}Al_{0.1}O₂. As an example, as the positive electrode active material that is the lithium nickel composite metal oxide represented by Chemical Formula 2, LiNi_{0.6}Co_{0.2}Mn_{0.2}O₂ and LiNi_{0.8}Co_{0.1}Mn_{0.1}O₂ may be used alone or in combination.

Further, an amount of the positive electrode active material may range from 80 to 99.5 parts by weight with respect to 100 parts by weight of the positive electrode mixture layer, and specifically, may range from 88 to 95 parts by weight, 90 to 95 parts by weight, 86 to 90 parts by weight, or 92 to 95 parts by weight.

In addition, the positive electrode additive may be included in an amount of 0.1 to 5 parts by weight with respect to 100 parts by weight of the positive electrode mixture layer, and specifically, may be included in an amount of 0.1 to 4 parts by weight, 0.1 to 3 parts by weight, 0.1 to 2 parts by weight, 0.1 to 1 parts by weight, 0.5 to 2 parts by weight, 1 to 3 parts by weight, 2 to 4 parts by weight, 1.5 to 3.5 parts by weight, 0.5 to 1.5 parts by weight, or 1 to 2 parts by weight.

Further, the conductive material may be included in an amount of 1 to 10 parts by weight with respect to 100 parts by weight of the mixture layer, and specifically, may be included in an amount of 2 to 8 parts by weight or 1 to 5 parts by weight.

In addition, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include polyvinylidene fluoride.

Further, the binder may be included in an amount of 1 to 10 parts by weight with respect to 100 parts by weight of the total amount of the mixture layer, and specifically, may be included in an amount of 2 to 8 parts by weight or 1 to 5 parts by weight.

In addition, the positive electrode mixture layer may further include a conductive material, and in this case, the amount of the conductive material may be 2 parts by weight or less with respect to 100 parts by weight of the positive electrode mixture layer. For example, the conductive material may be included in an amount of 0.1 to 2 parts by weight, 0.1 to 1.5 parts by weight, 0.1 to 1 parts by weight, or 0.1 to 0.5 parts by weight with respect to 100 parts by weight of the positive electrode mixture layer.

Further, examples of the conductive material may include one or more carbon-based materials selected from the group consisting of natural graphite, artificial graphite, carbon black, acetylene black, Ketjen black, and carbon fibers. For example, the conductive material may include acetylene black.

Meanwhile, although an average thickness of the positive electrode mixture layer is not particularly limited, specifically, the average thickness may range from 50 µm to 300 µm, and more specifically, may range from 100 µm to 200 µm, 80 µm to 150 µm, 120 µm to 170 µm, 150 µm to 300 µm, 200 µm to 300 µm, or 150 µm to 190 µm.

Further, as the positive electrode current collector of the positive electrode, a material having high conductivity without causing chemical change in the battery may be used. For example, stainless steel, aluminum, nickel, titanium, calcined carbon, or the like may be used, and when aluminum or stainless steel is used, a material surface-treated with carbon, nickel, titanium, the silver, or the like may be used. Further, the positive electrode current collector may have fine irregularities formed on a surface thereof to increase an adhesive force of the positive electrode active material, and may be formed in various forms such as a film, a sheet, a foil, a net, a porous body, a foam body, a nonwoven body, and the like. In addition, an average thickness of the positive electrode current collector may be appropriately applied in a range of 3 to 500 µm in consideration of the conductivity and total thickness of the positive electrode to be manufactured.

### Lithium secondary battery

Furthermore, in an embodiment, the present disclosure provides a lithium secondary battery including the positive electrode according to the present technology described above, a negative electrode, and a separator interposed between the positive electrode and the negative electrode.

The lithium secondary battery according to the present technology may include the positive electrode of the present technology described above to induce delithiation of the positive electrode additive at a high rate under a condition of a low voltage less than or equal to an available voltage during initial charging, and thus an amount of oxygen gas generated during subsequent charging and discharging is significantly small, and accordingly, there is an advantage in that electrical performance and safety of the lithium secondary battery are excellent.

The lithium secondary battery of the present technology has a structure including a positive electrode, a negative electrode, and a separator interposed between the positive electrode and the negative electrode.

Here, the negative electrode may be manufactured by applying, drying, and pressing a negative electrode active material on a negative electrode current collector, and may optionally further include the same conductive material as in the positive electrode, an organic binder polymer, an additive, and the like as necessary.

Further, the negative electrode active material may include, for example, a carbon material and a silicon material. The carbon material refers to a carbon material containing a carbon element as a main component, and examples of the carbon material may include graphite with a completely layered crystal structure like natural graphite, soft carbon having a low crystallinity layered crystal structure (graphene structure; a structure in which hexagonal honeycomb planes of carbon are arranged in layers), hard carbon in which these structures are mixed with amorphous parts, artificial graphite, expanded graphite, carbon fiber, non-graphitizable carbon, carbon black, acetylene black, Ketjen black, carbon nanotubes, fullerenes, activated carbon, graphene, carbon nanotubes, and the like, and preferably, may include one or more materials selected from the group consisting of natural graphite, artificial graphite, graphene, and carbon nanotubes. More preferably, the carbon material may include natural graphite and/or artificial graphite, and may include any one or more of graphene and carbon nanotubes together with the natural graphite and/or artificial graphite. In this case, the carbon material may include 50 to 95 parts by weight of graphene and/or carbon nanotubes with respect to 100 parts by weight of the total amount of the carbon material, and more specifically, may include 60 to 90 parts by weight or 70 to 80 parts by weight of graphene and/or carbon nanotubes with respect to 100 parts by weight of the total amount of the carbon material.

Further, the silicon material has particles containing silicon (Si), which is a metal component, as a main component and may include one or more of silicon (Si) particles and silicon oxide (SiOₓ, 1≤X≤2) particles. As an example, the silicon material may include silicon (Si) particles, silicon monoxide (SiO) particles, silicon dioxide (SiO₂) particles, or a mixture thereof.

In addition, the silicon material may have a form in which crystalline particles and amorphous particles are mixed, and a proportion of the amorphous particles may range from 50 to 100 parts by weight of with respect to 100 parts by weight of the total amount of the silicon material, and specifically, may range from 50 to 90 parts by weight, 60 to 80 parts by weight, or 85 to 100 parts by weight. In the present technology, by controlling the proportion of the amorphous particles contained in the silicon material within the above range, thermal stability and flexibility can be improved in a range in which the electrical properties of the electrode are not degraded.

Further, the negative electrode active material may include a carbon material and a silicon material, wherein the silicon material may be included in an amount of 1 to 20 parts by weight with respect to 100 parts by weight of a negative electrode mixture layer, and specifically, may be included in an amount of 5 to 20 parts by weight, 3 to 10 parts by weight, 8 to 15 parts by weight, 13 to 18 parts by weight, or 2 to 7 parts by weight with respect to 100 parts by weight of the negative electrode mixture layer.

In the present technology, by adjusting the amounts of the carbon material and the silicon material contained in the negative electrode active material within the above ranges, the charging capacity per unit mass can be improved while reducing lithium consumption and irreversible capacity loss during initial charging and discharging of the battery.

As an example, the negative electrode active material may include 95±2 parts by weight of graphite with respect to 100 parts by weight of the negative electrode mixture layer, and 5±2 parts by weight of a mixture in which silicon monoxide (SiO) particles and silicon dioxide (SiO₂) particles are uniformly mixed. In the present technology, by adjusting the amounts of the carbon material and the silicon material contained in the negative electrode active material within the above ranges, the charging capacity per unit mass can be improved while reducing lithium consumption and irreversible capacity loss during initial charging and discharging of the battery.

In addition, the negative electrode mixture layer may further include a binder to adhere the negative electrode active material onto the negative electrode current collector. For example, the negative electrode mixture layer may include any one of or a mixture of two or more of polyvinylidene fluoride (PVDF), polyacrylic acid (PAA), polymethacrylic acid (PMAA), styrene-butadiene rubber (SBR), carboxymethyl cellulose (CMC), and the like as the binder.

In this case, an amount of the binder may range from 0.5 to 5 parts by weight with respect to 100 parts by weight of the negative electrode mixture layer, and specifically, may range from 0.5 to 4 parts by weight or 1 to 3 parts by weight.

Further, the negative electrode mixture layer may have an average thickness of 100 µm to 200 µm, and specifically, may have an average thickness of 100 µm to 180 µm, 100 µm to 150 µm, 120 µm to 200 µm, 140 µm to 200 µm, or 140 µm to 160 µm.

In addition, the negative electrode current collector is not particularly limited to any current collector as long as it has high conductivity without causing a chemical change in the battery, and for example, a copper, stainless steel, nickel, titanium, calcined carbon, or the like may be used, and when copper or stainless steel is used, a material surface-treated with carbon, nickel, titanium, silver, or the like may be used. Further, the negative electrode current collector, like the positive electrode current collector, may have fine irregularities formed on a surface thereof to strengthen a bonding force with the negative electrode active material, and may be formed in various forms such as a film, a sheet, a foil, a net, a porous body, a foam body, a nonwoven body, and the like. In addition, an average thickness of the negative electrode current collector may be appropriately applied in a range of 3 to 500 µm in consideration of the conductivity and total thickness of a negative electrode to be manufactured.

Further, the separator is interposed between the positive electrode and the negative electrode, and an insulating thin film having high ion permeability and mechanical strength is used. The separator is not particularly limited as long as it is commonly used in the art, and specifically, a sheet or non-woven fabric made of chemical-resistant and hydrophobic polypropylene, glass fiber, polyethylene, or the like may be used, and in some cases, a composite separator in which a porous polymer base material such as a sheet or nonwoven fabric is coated with inorganic particles/organic particles by an organic binder polymer may be used. When a solid electrolyte such as a polymer or the like is used as an electrolyte, the solid electrolyte may also serve as a separator. In addition, pores of the separator may have an average diameter of 0.01 to 10 µm and an average thickness of 5 to 300 µm.

Meanwhile, the positive electrode and the negative electrode may be wound in the form of a jelly roll, and may be accommodated in a cylindrical battery, a prismatic battery, or a pouch-type battery or accommodated in a pouch-type battery in a folding or stack-and-folding form, but the present technology is not limited thereto.

Further, a lithium salt-containing electrolyte according to the present technology may consist of an electrolyte and a lithium salt, and examples of the lithium salt-containing electrolyte may include a non-aqueous organic solvent, an organic solid electrolyte, an inorganic solid electrolyte, and the like.

Examples of the non-aqueous organic solvent may include an aprotic organic solvent such as N-methyl-2-pyrrolidinone, ethylene carbonate (EC), propylene carbonate, butylene carbonate, dimethyl carbonate (DMC), diethyl carbonate (DEC), gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, etc.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, polymeric materials containing ionic dissociation groups, etc.

Examples of the inorganic solid electrolyte may include nitrides, halides, sulfates, etc. of Li such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like.

The lithium salt is a material that is easily soluble in a non-aqueous electrolyte, and examples of the lithium salt may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lithium lower aliphatic carboxylates, lithium tetraphenylboronate, imide, etc.

Further, for the purpose of improving charging and discharging characteristics, flame retardancy, etc., pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. may be added to the electrolyte. In some cases, in order to impart incombustibility, a halogen-containing solvent such as carbon tetrachloride, ethylene trifluoride, etc. may be further included, and in order to improve high-temperature storage characteristics, carbon dioxide gas may further include and fluoroethylene carbonate (FEC), propene sultone (PRS), etc. may further included.

### [Mode for Implementation of the Invention]

Hereinafter, the present invention will be described in more detail with reference to examples and comparative examples.

However, examples and comparative examples described below are merely intended to illustrate the present invention, and the content of the present invention is not limited to the examples and comparative examples described below.

### Examples 1 to 4. Preparation of positive electrode additive

Graphene, which is a carbon material, and polyvinyl alcohol (PVA) were weighed with respect to 100 parts by weight of Li₆CoO₄ or Li₆Co_{0.7}Zn_{0.3}O₄, which is a lithium cobalt oxide represented by Chemical Formula 1, as shown in Table 1 below, and introduced into a homo mixer, and mixed at 3,000 rpm for 60 minutes. Thereafter, the mixture was heat-treated at 750±20 °C, the graphene and polyvinyl alcohol were thermally decomposed, and a positive electrode additive in which the graphene was adsorbed on the lithium cobalt oxide through a hydroxyl group remaining on the graphene was prepared. In this case, an average particle size of the lithium cobalt oxide was 4±0.5 µm, and an average thickness of the adsorbed carbon material was 100±5 nm.

**[Table 1]**

| | Type of positive electrode additive | Amount of carbon material | Amount of PVA | Adsorption area ratio of carbon material |
|---|---|---|---|---|
| Example 1 | Li₆CoO₄ | 5 parts by weight | 2 parts by weight | 70% |
| Example 2 | Li₆CoO₄ | 10 parts by weight | 6 parts by weight | 100% |
| Example 3 | Li₆CoO₄ | 7.5 parts by weight | 4 parts by weight | 85% |
| Example 4 | Li₆Co_{0.7}Zn_{0.3}O₄ | 8 parts by weight | 4 parts by weight | 85% |

### Examples 5 and 6. Preparation of positive electrode additive

Graphene and polyethyleneimine (PEI) were weighed with respect to 100 parts by weight of Li₆CoO₄ or Li₆Co_{0.7}Zn_{0.3}O₄, which is the lithium cobalt oxide represented by Chemical Formula 1, as shown in Table 2, and introduced into a homo mixer, mixed at 3,000 rpm for 60 minutes, and then vacuum dried at 70±2 °C for 10 hours, and a positive electrode additive in which the graphene was adsorbed on the lithium cobalt oxide through an amino group of the polyethyleneimine was prepared. In this case, an average particle size of the lithium cobalt oxide was 4±0.5 µm, and an average thickness of the adsorbed carbon material was 180±10 nm.

**[Table 2]**

| | Type of positive electrode additive | Amount of carbon material | Amount of PEI | Adsorption area ratio of carbon material |
|---|---|---|---|---|
| Example 5 | Li₆CoO₄ | 7.5 parts by weight | 2 parts by weight | 85% |
| Example 6 | Li₆Co_{0.7}Zn_{0.3}O₄ | 8 parts by weight | 2.5 parts by weight | 85% |

### Comparative Examples 1 to 4. Preparation of positive electrode additive

As shown in Table 3 below, Li₆CoO₄, which is a lithium cobalt oxide, and graphene, which is a carbon material, and polyvinyl alcohol (PVA) were prepared, the graphene and the polyvinyl alcohol were weighed with respect to 100 parts by weight of the lithium cobalt oxide, introduced into a homo mixer, and mixed at 3,000 rpm for 60 minutes. Thereafter, the mixture was heat-treated at 750±20 °C, the graphene and the polyvinyl alcohol were thermally decomposed, and a positive electrode additive in which the graphene was adsorbed on the lithium cobalt oxide through a hydroxyl group remaining on the graphene was prepared. In this case, an average particle size of the lithium cobalt oxide was 4±0.5 µm, and an average thickness of the adsorbed carbon material was 95±2 nm.

**[Table 3]**

| | Type of positive electrode additive | Amount of carbon material | Amount of PVA | Adsorption area ratio of carbon material |
|---|---|---|---|---|
| Comparative Example 1 | Li₆CoO₄ | Not included | Not included | 0% |
| Comparative Example 2 | Li₆Co_{0.7}Zn_{0.3}O₄ | Not included | Not included | 0% |
| Comparative Example 3 | Li₆CoO₄ | 7.5 parts by weight | Not included | 68% |
| Comparative Example 4 | Li₆CoO₄ | 2 parts by weight | 0.8 parts by weight | 50% |

### Comparative Example 5. Preparation of positive electrode additive

Lithium oxide (Li₂O) and cobalt oxide (CoO) were put into a reactor to have a molar ratio of 3.0 to 3.03, and uniformly dry-mixed for about 30 minutes using a mixer. Then, graphene, which is a carbon material, and polyvinyl alcohol (PVA) were further mixed in amounts of 7.5 parts by weight and 4 parts by weight with respect to 100 parts by weight of the lithium oxide and the cobalt oxide, respectively, a prepared raw material mixture was put in an electric furnace, and then calcined at about 700 °C for 10 hours under an argon gas (Ar) condition, and a lithium cobalt oxide (Li₆CoO₄) in which the graphene was dispersed inside and on a surface thereof was obtained as a positive electrode additive.

### Experimental Example.

In order to evaluate the performance of the positive electrode additive according to the present technology, first, a positive electrode in which the positive electrode additive was contained in a positive electrode mixture layer was prepared, and a lithium secondary battery including the positive electrode was manufactured.

Specifically, first, N-methylpyrrolidone was introduced into a homo mixer, and 97.8 parts by weight of LiNi_{0.6}Co_{0.2}Mn_{0.2}O₂, which is a positive electrode active material, and the positive electrode additive, which was prepared in each of Examples 1 to 6 and Comparative Examples 1 to 5, 0.7 parts by weight of carbon black (average size: 2±0.5 µm), which is a conductive material, and 1.5 parts by weight of PVdF, which is a binder, were weighed and added with respect to 100 parts by weight of a positive electrode slurry solid content, and mixed at 2,000 rpm for 60 minutes to prepare a positive electrode slurry for a lithium secondary battery. Here, the amount of the positive electrode additive was adjusted to 0.8 parts by weight with respect to 100 parts by weight of the solid content (i.e. weight of the positive electrode mixture layer) of the positive electrode slurry. The prepared positive electrode slurry was applied onto one surface of an aluminum current collector, dried at 100 °C, and then rolled to manufacture a positive electrode. In this case, a total thickness of the positive electrode mixture layer was 130 µm, and a total thickness of the prepared positive electrode was about 200 µm.

84 parts by weight of natural graphite, which is a negative electrode active material, 14 parts by weight of silicon oxide (SiOₓ, here 1≤x≤2) particles, and 2 parts by weight of styrene butadiene rubber (SBR), which is a binder, were prepared with respect to 100 parts by weight of the negative electrode slurry solid content, and a negative electrode slurry was prepared in the same manner as the method of preparing the positive electrode slurry. In this case, the graphite used in the preparation of the negative electrode mixture layer was natural graphite (average particle size of: 0.01 to 0.5 µm), and silicon oxide (SiOₓ) particles having an average particle size of 0.9 to 1.1 µm was used. The prepared negative electrode slurry was applied onto one surface of a copper current collector, dried at 100 °C, and then rolled to manufacture a negative electrode. In this case, a total thickness of the negative electrode mixture layer was 150 µm, and a total thickness of the prepared negative electrode was about 250 µm.

A separator (thickness: about 16 µm) made of a porous polyethylene (PE) film was laminated to be interposed between the prepared positive electrode and negative electrode, and E2DVC serving as an electrolyte was introduced to manufacture a full-cell type lithium secondary battery.

Here, the "E2DVC" is a type of carbonate-based electrolyte, and is a solution obtained by mixing lithium hexafluorophosphate (LiPF₆, 1.0 M) and vinyl carbonate (VC, 2 wt%) in a mixture of EC:DMC:DEC=1:1:1 (volume ratio).

The manufactured cell was initially charged and discharged under the current conditions as shown in the table below at 22±2 °C to measure the initial charge capacity (CC) and initial discharge capacity (DC) of the positive electrode additive and calculate a ratio (CC/DC) thereof. In this case, a potential range of the battery ranged from 2.5 to 4.25 V.

The following experiments were performed on each manufactured lithium secondary battery.

### A) Analysis of degassed gas during charging and discharging

Initial charging (formation) was performed at 55 °C under conditions of 3.5 V and 1.0 C on each lithium secondary battery containing the positive electrode additive of each of the examples and comparative examples, a total amount of gases generated during charging and discharging and amounts of carbon oxides (CO and CO₂) were measured by repeatedly performing charging and discharging 50 times at 45 °C under conditions of 0.3 C/0.3 C, and results of the measurement are shown in Table 4 below.

### B) Electrode resistance evaluation

In order to evaluate the electrical conductivity of the positive electrode containing the positive electrode additive according to the present technology, the state of charge (SoC) was adjusted to 50% and then fast discharging was performed on each of the lithium secondary batteries for 10 seconds to measure the resistance of the secondary batteries, and results of the measurement are shown in Table 4 below.

### C) Evaluation of charge/discharge capacity and capacity retention rate

Each of the lithium secondary batteries were charged at a temperature of 25 °C with a charging current of 0.1 C to a final charging voltage of 4.2 V to 4.25 V, and were activated by being charged until a current density reached 0.01 C at the final voltage. Then, the lithium secondary batteries were discharged to a final voltage of 2 V with a discharge current of 0.1 C, and an initial charge/discharge capacity per unit mass was measured. Then, the charge/discharge capacity was measured while charging and discharging were repeatedly performed 50 times at 45 °C under a condition of 0.3 C, and after the charging and discharging were performed 50 times, the charge/discharge capacity retention rate was calculated. Results of the calculation are shown in Table 4 below.

### D) Evaluation of fast charging properties

Fast charge efficiency was calculated by charging each lithium secondary battery with a current of 5.0 C after charging and discharging with a current of 0.1 C. Here, the fast charge efficiency was derived as a ratio (5.0 C/0.1 C) of the capacity charged with the current of 5.0 C to the capacity charged with the current of 0.1 C, and results of the measurement are shown in Table 4 below.

**[Table 4]**

| Type of positive electrode additive | Degassed gas analysis | | Electrode resistance [Ω] | Electrical properties | | |
|---|---|---|---|---|---|---|
| | Total generation amount [mL/g] | Carbon oxide generation amount [mL/g] | | Initial charge/disc harge capacity [mAh] | Capacity retention rate [%] after charging and discharging 50 times | Fast charge efficiency [%] |
| Example 1 | 2,019 | 223 | 0.57 | 103.8 | 90.7 | 91.0 |
| Example 2 | 2,003 | 230 | 0.49 | 104.9 | 91.2 | 90.5 |
| Example 3 | 2,011 | 217 | 0.53 | 104.7 | 91.4 | 90.2 |
| Example 4 | 2,008 | 215 | 0.55 | 104.2 | 91.1 | 90.7 |
| Example 5 | 1,998 | 154 | 0.51 | 104.6 | 92.0 | 91.1 |
| Example 6 | 1,989 | 139 | 0.49 | 105.4 | 91.8 | 91.6 |
| Comparative Example 1 | 2,183 | 261 | 0.84 | 101.8 | 89.4 | 87.8 |
| Comparative Example 2 | 2,154 | 252 | 0.86 | 102.4 | 89.6 | 88.4 |
| Comparative Example 3 | 2,077 | 249 | 0.60 | 103.4 | 90.5 | 89.3 |
| Comparative Example 4 | 2,107 | 251 | 0.62 | 103.1 | 90.0 | 89.8 |
| Comparative Example 5 | 2,111 | 269 | 0.55 | 103.7 | 90.1 | 90.0 |

As shown in Table 4, it is indicated that the lithium secondary battery using the positive electrode additive of the example including the carbon material on the surface of the lithium cobalt oxide represented by Chemical Formula 1 according to the present technology has a small amount of gases generated during charging and discharging, and in particular, in the lithium secondary battery containing the positive electrode additive prepared in Examples 5 and 6, the amount of carbon oxides such as CO, CO₂, or the like was reduced. Further, it was confirmed that the lithium secondary battery including the positive electrode additive of the example had an electrode resistance of 0.58 Ω or less. In addition, the lithium secondary battery including the positive electrode additive of the example exhibited a high initial charge/discharge capacity of 103.8 mAh or more and maintained 90.5% or more of the initial charge/discharge capacity even after repeated charging and discharging 50 times, and the lithium secondary battery exhibited a high efficiency of 90.2% during fast charging.

According to the above results, it can be seen that the positive electrode additive according to the present technology contains the carbon material on the surface of the lithium cobalt oxide represented by Chemical Formula 1 to improve the low electrical conductivity of the positive electrode additive, and the positive electrode additive according to the present technology has an excellent effect of improving the problem caused by the amount of gases generated during initial charging and discharging (i.e., "activation"), and thus the positive electrode and the lithium secondary battery including the positive electrode additive according to the present technology have excellent electrical performance.

While exemplary embodiments of the present invention and their advantages have been described above in detail, it should be understood by those skilled in the art that various changes, substitutions and alterations may be made herein without departing from the scope of the invention as defined by the following claims.

Therefore, the technical scope of the present invention should not be limited to the contents described in the detailed description of the specification, but should be defined by the appended claims.

## Claims

1. A positive electrode additive containing:
a lithium cobalt oxide represented by Chemical Formula 1 below; and
a carbon material adsorbed onto a surface of the lithium cobalt oxide:
[Chemical Formula 1] LiₚCo_{(1-q)}M¹_{q}O₄
in Chemical Formula 1 above, M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

2. The positive electrode additive of claim 1, wherein the carbon material includes one or more materials selected from the group consisting of carbon nanotubes, carbon nanofibers, graphite, graphene, carbon black, Ketjen black, and acetylene black.

3. The positive electrode additive of claim 1, wherein the carbon material has a surface that is modified with one or more functional groups selected from the group consisting of a hydroxyl group, a carboxyl group, an amino group, an amide group, a sulfone group, and a sulfide group.

4. The positive electrode additive of claim 1, wherein the carbon material has a surface that contains one or more compounds selected from the group consisting of monoethanolamine, diethanolamine, triethanolamine, diethylenetriamine, triethylenetetraamine, trisaminoC1-3alkylamine, polyC1-3alkyleneamine, and polyC1-3alkyleneimine.

5. The positive electrode additive of claim 1, wherein the carbon material is adsorbed onto 70% or more of an entire surface of the lithium cobalt oxide.

6. The positive electrode additive of claim 1, wherein a content of the carbon material ranges from 0.1 to 20 parts by weight with respect to 100 parts by weight of the lithium cobalt oxide.

7. The positive electrode additive of claim 1, wherein an average thickness of the adsorbed carbon material ranges from 10 nm to 200 nm.

8. The positive electrode additive of claim 1, wherein an average particle size of the lithium cobalt oxide ranges from 0.1 to 10 µm.

9. The positive electrode additive of claim 1, wherein the lithium cobalt oxide has a tetragonal structure with a space group of P4₂/nmc.

10. A positive electrode for a lithium secondary battery, the positive electrode comprising:
a positive electrode current collector; and
a positive electrode mixture layer positioned on the positive electrode current collector and containing a positive electrode active material, the positive electrode additive according to claim 1, and a binder.

11. The positive electrode of claim 10, wherein the positive electrode active material is a lithium metal composite oxide represented by Chemical Formula 2 below:
[Chemical Formula 2] Liₓ[Ni_{y}Co_{z}Mn_{w}M²ᵥ]Oᵤ
in Chemical Formula 2 above, M² denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0≤y<0.95, 0<z≤0.5, 0<w≤0.5, 0≤v≤0.2, and 1.5≤u≤4.5, respectively.

12. The positive electrode of claim 10, wherein the positive electrode active material is included in an amount of 80 to 99.5 parts by weight with respect to 100 parts by weight of the positive electrode mixture layer.

13. The positive electrode of claim 10, wherein the positive electrode additive is included in an amount of 0.1 to 5 parts by weight with respect to 100 parts by weight of the positive electrode mixture layer.

14. The positive electrode of claim 10, wherein the positive electrode further includes a conductive material,
wherein the conductive material is included in an amount of 2 parts by weight or less with respect to 100 parts by weight of the positive electrode mixture layer.
